Europäisches Patentamt

European Patent Office

Office européen des brevets

(19)

(11) Veröffentlichungsnummer: **0 219 774**
**B1**

(12) **EUROPÄISCHE PATENTSCHRIFT**

(45) Veröffentlichungstag der Patentschrift: 14.03.90

(21) Anmeldenummer: 86114011.9

(22) Anmeldetag: 09.10.86

(51) Int. Cl.⁵: **B 29 C 63/02,** B 29 C 65/04, B 29 C 65/74 // B29L31:30

(54) Verfahren und Vorrichtung zum Umhüllen eines Polsterkörpers, insbesondere einer Sonnenblende, mit einem aus zwei Zuschnitten bestehenden, bahnförmigen Umhüllungsmaterial.

(30) Priorität: 18.10.85 DE 3537169

(43) Veröffentlichungstag der Anmeldung:
29.04.87 Patentblatt 87/18

(45) Bekanntmachung des Hinweises auf die
Patenterteilung:
14.03.90 Patentblatt 90/11

(84) Benannte Vertragsstaaten:
DE FR GB IT SE

(56) Entgegenhaltungen:
FR-A-2 071 486

PATENT ABSTRACTS OF JAPAN, Band 7, Nr.
106 (M-213)1251r, 10. Mai 1983; & JP-A-68 28
328 (ISHIZUKA K.K.) 19.02.1983
G.F. ABELE: "Hochfrequenz-Schweisstechnik",
2. Auflage, 1973, Seiten 210-218, Zechner &
Hüthig Verlag GmbH, Speyer am Rhein, DE"

(73) Patentinhaber: Gebr. Happich GmbH
Postfach 10 02 49 Clausenbrücke 1
D-5600 Wuppertal 1 (DE)

(72) Erfinder: Zwirner, Gerhard
Bachstrasse 120
D-5657 Haan (DE)

## Beschreibung

Die Erfindung bezieht sich auf ein Verfahren der im Oberbegriff des Patentanspruchs 1 und auf eine Vorrichtung der im Oberbegriff des Patentanspruchs 3 näher angegebenen Art.

In der JP—A—58—28328 ist ein Verfahren und eine Vorrichtung der gattungsgemäßen Art beschrieben. Ein ähnliches Verfahren und eine ähnliche Vorrichtung ist zudem in der FR—A—2 071 486 offenbart.

Bei der Herstellung von als Polsterkörper ausgebildeten Ausstattungsteilen von Kraftfahrzeugen, wie Kopfstützen, Armlehnen, Sonnenblenden usw., aber auch von ähnlichen Gegenständen außerhalb der Krakftfahrzeug-Industrie, werden häufig PVC-Folien als Umhüllungsmaterial verwendet, die durch Hochfrequenzschweißen miteinander verbunden werden. Die Hochfrequenzschweißung von Kunststoffen geht über die dielektrische Erwärmung nichtleitender polarer Stoffe im hochfrequenten elektrischen Feld vor sich. Es handelt sich hierbei um ein sicheres und schnelles Verfahren, das dazu den Vorteil hat, daß der Schweißüberstand, sofern mit Trennkanten kombinierte Elektroden verwendet werden, längs eines Restfilms, unmittelbar nach der Schweißung ohne besondere Hilfsmittel abgerissen werden kann, so daß eine saubere und glatte Schweißnaht, die wenig oder gar nicht nachgearbeitet zu werden braucht, verbleibt. Es kann also davon ausgegangen werden, daß das Abtrennen der Randzugaben des Schweißgutes in der Regel durch die Anwendung kombinierter Schweiß-Trennkanten in einem Arbeitsgang erfolgt und daß der beim Trennschweißen verbleibende Restfilm der Folie sich bei richtiger Einstellung mühelos reißen läßt. Das ist aber nicht so, wenn das Dielektrikum teils aus Geweben, Leder oder dergleichen besteht, die mitgeschweißt bzw. in der thermoplastischen Folie verankert werden. Zunächst ergibt sich die Schwierigkeit, daß die üblichen textilen Flächengebilde, ebenso wie Leder oder dergleichen, nicht hochfrequenzschweißbar sind und daher mit einem hochfrequenzschweißbaren Material beschichtet werden müssen, um eine Verbindung mit einer Unterlage oder miteinander zu erreichen. Gravierender ist jedoch der Umstand, daß ein Abreißen des Schweißüberstandes bei diesen Materialien nicht möglich ist, da z.B. das Fasermaterial durch die Hochfrequenzschweißung nicht erweicht wird. Derartiges beschichtetes Textilmaterial (oder auch Leder oder dergleichen) kann daher um die Schweißnaht herum nur beschnitten oder durch Stanzen vom Schweißüberstand befreit werden. Dafür sind Verfahren, wie sie in den Unterlagen von HF SCHWEISSTECHNIK, G. F. ABELE, ZECHNER & HÜTHIG VERLAG, SPEYER, 1965, Seiten 269—275, der JP—A—58—28328 und der FR—A 2 071 486 beschrieben werden, geeignet.

Die der Erfindung zugrundeliegende Aufgabe besteht nun darin, die bekannten Verfahren und Vorrichtungen weiter zu verbessern.

Die erfindungsgemäße Lösung dieser Aufgabe ist im Kennzeichenteil der Patentansprüche 1 für ein Verfahren und 3 für eine Vorrichtung angegeben, während der Patentanspruch 2 eine zweckmäßige Weiterbildung des Verfahrens angibt.

Die Erfindung wird nachfolgend anhand der Zeichnung näher erläutert. Es zeigen:

Fig. 1 einen nach dem erfindungsgemäßen Verfahren umhüllten als Sonnenblende ausgebildeten Polsterkörper,

Fig. 2 einen Schnitt 11—11 nach Fig. 1

Fig. 3 einen Polsterkörper, der auf seinen Hauptflächen jeweils mit einem Umhüllungsmaterial-Zuschnitt belegt ist,

Fig. 4 einen in einer Schweiß-Lochvorrichtung befindlichen Polsterkörper nach erfolgter Schweißung und

Fig. 5 ein Ausführungsbeispiel der Vorrichtung.

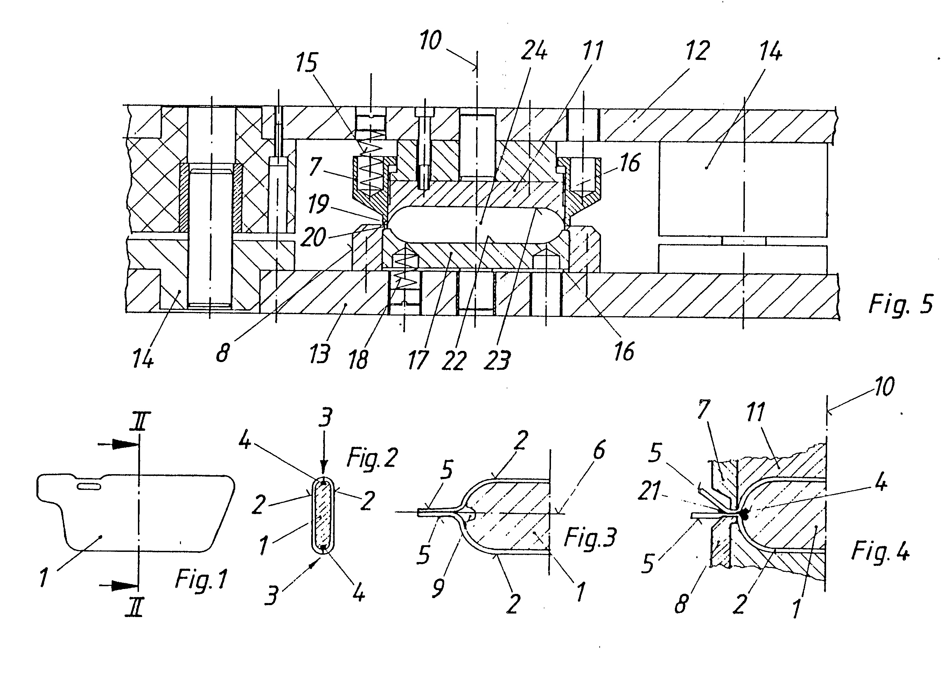

In den Fig. 1 und 2 ist eine Fahrzeugsonnenblende dargestellt, die aus einem aus Schaumkunststoff gebildeten Polsterkörper 1 und einer aus zwei Zuschnitten 2 eines bahnförmigen Umhüllungsmaterials gebildeten Umhüllung besteht. Das Umhüllungsmaterial kann aus einer PVC- (Polyvinylchlorid-) Folie, einem mit einem hochfrequenzschweißbaren Material beschichteten textilen Flächenerzeugnis, einer ggf. beschichteten Kunststofffaserbahn oder aus beschichtetem Leder bestehen. Die Zuschnitte 2 sind randseitig durch eine umlaufende Schweißnaht 3 miteinander verbunden, wobei die Schweißnaht 3 mit einer nach innen gerichteten, dem Polsterkörper 1 zugewandten Schweißraupe 4 und damit hochfest ausgebildet ist. Fig. 2 läßt erkennen, daß die Schweißnaht 3 besonders sauber, das heißt überstands- bwz. gratfrei ausgebildet ist und damit dem Aussehen nach einer Stumpfschweißnaht entspricht.

Fig. 3 zeigt den Polsterkörper 1, auf dessen Hauptflächen jeweils ein Umhüllungsmaterialzuschnitt 2 gelegt ist. Die Zuschnitte 2 sind flächengrößer als die Umrißkontur des Polsterkörpers 1, so daß jeder Zuschnitt 2 einen umlaufend überstehenden Flansch 5 in der Polsterkörpermittelebene 6 bildet. Die Flansche 5 werden zwischen zwei einander zugekehrten Stegelektroden 7, 8 (Fig. 4 und 5) eingespannt und durch Hochfrequenzschweißen derart umlaufend miteinander verschweißt, daß durch Materialfluß an den körperzugelegenen Flanschrändern eine einwärts ausgerichtete Schweißraupe 4 gebildet wird. Zweckmäßigerweise besitzt der Polsterkörper 1 in der Polsterkörpermittelebene 6 eine Umfangsnut 9, innerhalb der sich die Schweißraupe 4 behinderungsfrei ausdehnen kann.

Fig. 4 läßt das verfahrensgemäße und vorrichtungsgemäße Erfindungsprinzip erkennen. Es ist ersichtlich, daß die Flansche 5 zwischen den Stegelektroden 7 und 8, die längs einer axialen Mittellinie 10 relativbewegbar sind, eingespannt sind und daß in Fig. 4 der Zustand unmittelbar nach Fertigstellung der Schweißnaht 3 und Ausbildung der Schweißraupe 4 dargestellt ist. Der sich an die Schweißung anschließende Verfahrensschritt sieht ein Auslochen des fertig umhüllten Polsterkörpers 1 aus den Flanschen 5 mittels eines längs der axialen Mittellinie 10 beweglichen Lochstempel 11, der mit der als Lochring bzw. Matrize dienenden Stegelektrode 8 zusammen wirkt, vor.

Die in Fig. 5 dargestellte neue Vorrichtung umfaßt eine obere Elektrodenplatte 12 und eine untere Elektrodenplatte 13, die durch Säulenführungen 14 längs der axialen Mittellinie 10 relativbewegbar sind. Die obere Elektrodenplatte 12 trägt an ihrer Unterseite die Stegelektrode 7, die gegenüber der Elektrodenplatte 12 durch Federn 15 abgestützt ist und innerhalb des durch die Stegelektrode 7 umgrenzten Aufnahmeraums 16 einen starr mit der Elektrodenplatte 12 verbundenen Lochstempel 11. Die untere Elektrodenplatte 13 trägt auf ihrer Oberseite die Stegelektrode 8 und innerhalb des durch diese umgrenzten Aufnahmeraums 16 einen Stützkörper 17, der gegen die Kraft von Rückstellfedern 18 längs der axialen Mittellinie 10 bewegbar ist.

Die Stegelektrode 7 weist eine parallel zur axialen Mittellinie verlaufende Innenfläche auf, die an der Umfangsfläche des Lochstempels 11 nach Art eines Gleitlagers anliegt. Die Stegelektrode 7 weist weiterhin an ihrem der Gegenelektrode 8 zugewandten Endbereich eine gegenüber ihrem sonstigen Querschnitt wesentlich verjüngten Schweißsteg 19 auf. Die Gegen- bzw. Stegelektrode 8 ist mit einem flanschartig nach innen, also in den Aufnahmeraum 16 vorspringenden Schweißsteg 20 ausgebildet dessen innere Abschlußfläche mit der Innenfläche des Schweißsteges 19 fluchtet und damit parallel zur axialen Mittellinie 10 verläuft, während die der Stegelektrode 7 zugewandte Abschlußfläche senkrecht zur Mittellinie 10 ausgerichtet ist. Der Übergang ist scharfwinklig. Die Querschnittöffnung der Stegelektrode 8 ist im Bereich des Schweißsteges 20 exakt der Umfangskontur des Lochstempels 11 angepaßt, so daß der Lochstempel 11 den Schweißsteg 20 scherend passieren kann. Die konstruktive Gestaltung der Stegelektroden 7 und 8 stellt die Ausbildung einer einwärts gerichteten Schweißraupe 4 sicher und ermöglicht zudem die Bildung einer zweiten Schweißraupe 21, die es möglicherweise unnötig macht, den Einspanndruck der Stegelektroden 7, 8 während des Lochens zu erhöhen.

Der Stützkörper 17 und der Lochstempel 11 weisen jeweils an ihren einander zugewandten Seiten eine muldenförmige Ausnehmung 22, 23 auf, die sich zu einem den Polsterkörper 1 nebst Zuschnitten 2 eng umschließendes Formnest 24 ergänzen.

Bei der Herstellung einer Umhüllung wird wie folgt vorgegangen: Zunächst muß man sich die in Fig. 5 gezeigte Vorrichtung, die in eine übliche Schweißpresse einspannbar ist, geöffnet vorstellen, wobei zwischen den Elektrodenplatten 12 und 13 ein Abstand besteht, der ein Einlegen des Polsterkörpers 1 in das Formnest 24 erlaubt. In die muldenförmige Ausnehmung 22 des Stützkörpers 17 wird zunächst ein erster Zuschnitt 2 des Umhüllungsmaterials eingelegt, auf diesen Zuschnitt 2 der Polsterkörper 1 aufgelegt und auf diesen schließlich der zweite Zuschnitt 2 aufgelegt. Da es sich bei den Umhüllungsmaterialzuschnitten im allgemeinen um ein weichelastisches Material handelt, paßt sich dieses der Kontur der muldenförmigen Ausnehmung 22 ebenso an wie der Kontur des Polsterkörpers 1. Im eingelegten Zustand des Polsterkörpers 1 und der Zuschnitte 2 ergibt sich etwa das aus Fig. 3 ersichtliche Bild. Nunmehr werden die Elektrodenplatten 12, 13 gegeneinanderbewegt und dabei die Elektroden 7, 8 mit ihren Schweißstegen 19, 20 unter Einspannung der Flansche 5 gegeneinandergefahren. Es versteht sich, daß man den Abstand der Schweißstege 19, 20 voneinander variieren oder durch einen nicht dargestellten Anschlag auf ein festes Maß einstellen kann. Durch Einschalten der Hochfrequenz-Spannung wird nun die Schweißnaht 3 und die Schweißraupe 4 und ggf. 21 gebildet. Nach beendigtem Schweißvorgang wird die Elektrodenplatte 12 weiter in Richtung zur Elektrodenplatte 13 bewegt. Damit wird gleichzeitig auch der Lochstempel mit nach unten bewegt, um bei diesem Bewegungshub das Umhüllungsmaterial in unmittelbarer Nähe der körperzugelegenen Flanschränder zu lochen. Es kommt dabei zum Eintauchen des Lochstempels 11 in den Innenraum der dann als Lochring dienenden Stegelektrode 8. Durch die auf den umhüllten Polsterkörper 1 unmittelbar wirkende Hubbewegung des Lochstempels weicht auch der Stützkörper 17 gegen die Kraft der Rückstellfedern 18 in Richtung zur Elektrodenplatte 13 aus. Sobald der Lochstempel 11 zurückgefahren wird, drücken die Rückstellfedern 18 den Stützkörper 17 und damit den Polsterkörper 1 in die ursprüngliche Lage zurück. Der fertig umhüllte und im Schweißnahtbereich völlig gratfrei ausgebildete Polsterkörper 1 kann dann der Vorrichtung entnommen werden.

**Patentansprüche**

1. Verfahren zum Umhüllen eines Polsterkörpers (1), insbesondere einer Sonnenblende, mit einem aus zwei Zuschnitten bestehenden, bahnförmigen Umhüllungsmaterial, indem ein Zuschnitt (2) auf die eine Hauptfläche und der zweite Zuschnitt (2) auf die andere Hauptfläche des Polsterkörpers (1) gelegt und jeder Zuschnitt einen umlaufend überstehenden Flansch (5) in der Polsterkörpermittelebene (6) bildet, die Flansche (5) zwischen zwei einander zugekehrten Stegelektroden (7, 8) eingespannt und durch Hochfrequenzschweißen derart umlaufend miteinander verschweißt werden, daß durch Materialfluß an den körperzugelegten Flanschrändern eine einwärts ausgerichtete Schweißraupe (4) gebildet wird, wobei nach dem Beendigen des Schweißvorganges, das heißt nach Abschalten der Hochfrequenz-Spannung, die Flansche (5) zwischen den Elektroden (7, 8) eingespannt bleiben, während der Polsterkörper (1) mittels eines Lochstempels (11) senkrecht zu den Flanschen (5) bewegt und in unmittelbarer Nähe der körperzugelegenen Flanschränder unter Verwendung der Stegelektroden (7, 8) als Hilfswerkzeuge, indem die eine (7) als Niederhalter und die andere (8) als Lochring (Matrize) dient, aus den Flanschen (5) ausgelocht wird, dadurch gekennzeichnet, daß der Polsterkörper (1) mit den ihn bedeckenden Zuschnitten (2) des Umhüllungsmaterials zwischen einem unteren Stützelement (Stützkörper 17) und einem oberen Stützelement (Lochstempel 11) aufgenommen ist und von diesen Stützelementen (11, 17) sowohl während des Schweißvorganges als auch während der Auslochungsbewegung gehalten und geführt wird.

2. Verfahren nach Anspruch 1, dadurch gekennzeichnet, daß der Klemmdruck der Stegelektroden (7, 8) vor dem Abtrennen des Polsterkörpers von den Flanschen (5) erhöht wird.

3. Vorrichtung zum Durchführen des Verfahrens, insbesondere nach Anspruch 1, mit zwei einander zugekehrten Stegelektroden (7, 8), die längs einer axialen Mittellinie (10) relativbewegbar sind und zusammen einen der Umrißfläche des Polsterkörpers (1) entsprechenden Aufnahmeraum (16) bilden und mit einem Lochstempel (11), der innerhalb einer durch eine der Elektroden (7) gebildeten Aufnahmeraumhälfte längs der axialen Mittellinie (10) bewegbar und während des Bewegungshubes mit seiner, eine geschlossene Linie bildenden Schneide und der inneren Randkante der anderen, als Matrize dienenden Stegelektrode (8) vorbeischerbar angeordnet ist, dadurch gekennzeichnet, daß in der dem Lochstempel (11) gegenüberliegenden Aufnahmeraumhälfte ein längs der axialen Mittellinie (10) gegen die Kraft von Rückstellfedern (18) bewegbarer Stützkörper (17) für den Polsterkörper (1) angeordnet ist und daß die einander gegenüberliegenden Seiten des Lochstempels (11) und des Stützkörpers (17) muldenförmige Ausnehmungen (22, 23) aufweisen, die sich zu einem den Polsterkörper (1) bis auf einen in der Polsterkörpermittelebene liegenden Spalt, welcher zum Durchlaß der Flansche (5) der Umhüllungsmaterialzuschnitte (2) vorgesehen ist, eng umschließendes Formnest (24) ergänzen.

**Revendications**

1. Procédé et dispositif pour recouvrir un objet rembourré (1), en particulier un pare-soleil, d'une double bande de matériau composée de deux découpures, dans lequel une découpure (2) est placée sur l'une des faces principale et la deuxième découpure (2) est placée sur l'autre face principale du corps rembourré (1) et chaque découpure formant un rebord (5) dépassant sur le pourtour dans le plan médian (6) du corps rembourré, les rebords (5) étant serrés entre deux électrodes en barrettes (7, 8) tournées l'une vers l'autre et soudés entre elles de manière continue par soudage à haute fréquence, de sorte que, par le flux de matière sur les bordures des rebords tournés vers le corps, une chenille de soudure (4) orienté vers l'intérieur soit formé, les rebords (5) restant serrés entre les électrodes (7, 8) après achèvement du processus de soudage, c'est-à-dire après déconnexion de la tension à haute fréquence, tandis que le corps rembourré (1) est déplacé au moyen d'un poinçon perforateur (11) perpendiculairement aux rebords (5) et est séparé des rebords (5) par découpage à proximité immédiate des bordures renforcées des rebords en utilisant pour outil auxiliaire les électrodes en barrettes (7, 8), l'une (7) servant de serre-flan et l'autre (8) de bague de perçage (matrice), caractérisé en ce que le corps rembourré (1) avec ses découpures (2) de matériau de recouvrement qui le recouvrent est reçu entre un élément de soutien inférieur (corps de soutien 17) et un élément de soutien supérieur (poinçon perforateur 11) et est maintenu et guidé par ces éléments de soutien (11, 17) aussi bien pendant le processus de soudage qu'également pendant le déplacement de découpage.

2. Procédé selon la revendication 1, charactérisé en ce que la pression de serrage des électrodes en barrettes (7, 8) est accrue par la séparation du corps rembourré d'avec les rebords (5).

3. Dispositif pour l'exécution du procédé, en particulier selon la revendication 1, comprenant deux électrodes en barrettes (7, 8) tournées l'une vers l'autre et susceptibles d'être déplacées relativement le long d'une ligne médiane axiale (10) et formant conjointement un espace de réception (16) correspondant à la face profilée du corps rembourré (1) et comprenant un poinçon perforateur (11) susceptible d'être déplacé le long de la ligne médiane axiale (10), à l'intérieur d'une moitié d'espace de réception formé par l'une des électrodes (7), et disposé pendant la course de déplacement de manière à pouvoir réaliser une avance de cisaillement avec son tranchant formant une ligne fermée appliqué sur l'arête de bordure interne de l'autre électrode en barrettes (8) servant de matrice, caractérisé en ce qu'un corps de soutien (17) pour le corps rembourré (1), susceptible de se déplacer le long de la ligne médiane axiale (10) face à la force de ressorts de rappel (18), est disposé dans la moitié d'espace de réception située en face du poinçon perforateur (11) et en ce que les faces situées l'une en face de l'autre du poinçon perforateur (11) et du corps de soutien (17) présentent des évidements (22, 23) en forme d'auges, se complétant en formant une cavité de moulage (24) entourant étroitement le corps rembourré (1) jusqu'à un interstice, situé dans le plan médian du corps rembourré, qui est prévu pour le passage des rebords (5) des découpures (2) du matériau de recouvrement.

**Claims**

1. A method of jacketing a padded article (1), especially a sun visor, with two blanks cut off a web-shaped jacketing material, wherein one blank (2) is placed on one of the padded article's (1) main faces and the other blank (2) on the other main face, wherein each blank is formed with a continuous projecting rim (5) contained in the padded article's median plane (6), wherein the rims (5) are clamped between two oppositely arranged tongue electrodes (7, 8) and high-frequency welded to one another along their entire periphery so that, due to the resulting flow of material, an inwardly directed weld bead (4) is formed at the rim edges adjoining the article, wherein the rims (5) on completion of the welding operation — that is to say after the high-frequency voltage has been switched off — remain clamped between the electrodes while the padded article (1) is moved by a punch (11) in a direction perpendicular to the rims (5) and is stamped out of the rims (5) — by using the tongue electrodes (7, 8) as auxiliary tools, the one (7) serving as a press pad and the other (8) as a die (matrix) — in the direct vicinity of the rim edges adjoining it, characterized in that the padded article (1) and the blanks (2) of the jacketing material covering it are placed between a lower supporting member (a support 17) and a upper supporting member (the punch 11) and are held and guided by these members (11, 17) not only during the welding operation but also during the stamping action.

2. A method according to claim 1, characterized in that the clamping pressure of the electrodes (7, 8) is increased prior to the padded article being separated from the rims (5).

3. An appliance for carrying out the method according, especially, to claim 1, wherein the appliance is provided with the two oppositely arranged tongue electrodes (7, 8), which are movable relative to one another along an axially extending centre line (10) and which together define a receptacle (16) corresponding to the contour of the padded article (1), and with the punch (11), which is movable — along the centre line (10) — in one half of the receptacle defined by one (7) of the electrodes and which is arranged so that, when being moved, its bezel — forming an uninterrupted line — can cuttingly pass the inner edge of the other electrode (8) serving as a die, characterized in that the support (17) for the padded article (1) disposed in the receptacle's other half opposite the punch (11) is movable along the centre line (10) against the bias of restoring springs (18), that the oppositely located faces of the punch (11) and of the support (17) are each provided with a synclinal recess (22 and, respectively, 23), and in that these recesses complement each other so as to form a mould nest (24) which, except for a gap contained in the padded article's median plane and serving as a passage for the rims (5) of the jacketing material blanks (2) closely surrounds the padded article (1).

EP 0 219 774 B1

Fig. 5

Fig.1

Fig.2

Fig.3

Fig. 4